# EUROPÄISCHE PATENTSCHRIFT

(11) **EP 3 457 014 B1**
(45) Veröffentlichungstag und Bekanntmachung des Hinweises auf die Patenterteilung: **27.01.2021**
(21) Anmeldenummer: 18190281.8
(22) Anmeldetag: 22.08.2018
(51) Int. Cl.: F16L 25/00, F16L 21/00, F16L 9/00, F16L 9/17, F23J 13/04, F24F 13/02, F24C 15/20

(54) **KANALANORDNUNG MIT EINEM FLACHKANAL UND EINEM FLACHKANALVERBINDER**
DUCT ASSEMBLY WITH A FLAT DUCT AND A FLAT DUCT CONNECTOR
AGENCEMENT DE CONDUITS AVEC UN CONDUIT PLAT ET UN RACCORD DE CONDUITS PLATS

(30) Priorität: 14.09.2017 DE 202017105556 U
(43) Veröffentlichungstag der Anmeldung: 20.03.2019
(73) Patentinhaber: Naber Holding GmbH & Co. KG, 48529 Nordhorn (DE)
(72) Erfinder: Naber, Hans-Joachim, 48527 Nordhorn (DE)
(74) Vertreter: Angerhausen, Christoph

(56) Entgegenhaltungen:
- EP-A1- 1 788 259
- EP-A1- 2 042 796
- CH-A- 392 170
- DE-U1-202017 102 348
- DE-U1-202017 102 748
- DE-U1-202017 102 758
- FR-A- 1 580 914

## Beschreibung

Die Erfindung betrifft eine Kanalanordnung aus einem Flachkanalverbinder und einem Flachkanal, wobei der Flachkanal einen aus einem Dünnblech bestehenden Rechteckkanalabschnitt aufweist und über eine freie Stirnseite des Rechteckkanalabschnitts eine Aufsteckdichtung auf den Rechteckkanalabschnitt aufgesteckt ist, und wobei der Flachkanalverbinder einen ersten und einen zweiten Flachkanalanschluss aufweist, die über einen Rohrabschnitt miteinander verbunden sind, wobei im Querschnitt des Rohrabschnitts ein Stützelement angeordnet ist, das gegenüberliegende Wandabschnitte des Rohrabschnitts gegeneinander abstützt. Entsprechende Flachkanalverbinder werden insbesondere in Abluftkanalanordnungen verwendet, wie sie für die Abführung von Kochwrasen in Küchenabluftsystemen verwendet werden, beispielsweise um einzelne Flachkanalabschnitte des Abluftkanalsystems fluidisch dicht miteinander zu verbinden. Eine Abluftkanalanordnung ist beispielsweise bekannt aus der DE 20 2017 102 758 U1, die ein Blechrohr mit einer entlang der Längsrichtung des Blechrohrs verschieblich aufgenommenen Stützstruktur aufweist, über die gegenüber liegende Wandabschnitte des Blechrohrs gegeneinander abgestützt sind.

Aus sicherheitstechnischen Erwägungen ist es wünschenswert, Flachkanalsysteme aus nicht brennbaren Materialien herzustellen, insbesondere aus Metallblech. Um die Materialkosten zu senken und die Bauteilgewichte gering zu halten, ist es dabei erstrebenswert, die Materialstärken, aus denen das Flachkanalsystem gefertigt ist, so gering wie möglich zu halten. Die üblichen Querschnitte derartiger Flachkanalsysteme weisen jedoch vergleichsweise große Abmessungen auf, etwa bei einem Seitenverhältnis von 2:1 oder 3:1. Mit sinkenden Blechdicken neigen Flachkanäle und insbesondere die Flachkanalverbinder jedoch dazu, beispielsweise beim Transport aufgrund äußerer Belastungen, ihre Form zu verlieren, insbesondere tendieren die Außenwände der Flachkanalverbinder dazu, eine konkave Geometrie einzunehmen. Flachkanalsysteme sind insbesondere als Rechteckkanalsysteme ausgebildet, um platzsparend, etwa im Küchenbereich, verbaut werden zu können. Aufgrund ihrer Rechteckgeometrie sind sie jedoch besonders anfällig gegenüber Druckbelastungen, die zu den bereits erwähnten Konkavitäten führen können. Diese wiederum beeinträchtigen die Dichtleistung an den Anschlussstellen.

Es ist daher die Aufgabe der Erfindung, eine Kanalanordnung der eingangs beschriebenen Art vorzuschlagen, welcher bei möglichst geringem Materialeinsatz eine zuverlässige Abdichtung an den Anschlussstellen aufweist.

Diese Aufgabe wird durch eine Kanalanordnung mit den Merkmalen des Anspruchs 1 gelöst.. Die abhängigen Ansprüche beschreiben vorteilhafte Ausführungsformen der Erfindung.

Demgemäß ist vorgesehen, dass sowohl der Rohrabschnitt als auch die beiden Flachkanalanschlüsse aus Dünnblech bestehen und dass sich das Stützelement in Kanallängsrichtung von einer ersten freien Schnittkante bis zu einer zweiten freien Schnittkante an den Stirnseiten der Flachkanalanschlüsse erstreckt. Die Verwendung des Stützelements ermöglicht es, dass auch bei sehr geringen Materialstärken des Dünnblechs und damit entsprechend niedriger komponenteneigener mechanischer Stabilität des Rohrabschnitts der Flachkanalverbinder mit Hilfe des Stützelements eine zusätzliche Versteifung erfährt. Die über das Stützelement gegeneinander abgestützten Wandabschnitte können insbesondere die beiden langen Wandabschnitte des Flachkanalverbinders sein.

Die Flachkanalanschlüsse und der Rohrabschnitt können als ein einteiliges Blechformteil ausgebildet sein. Die Flachkanalanschlüsse und der Rohrabschnitt können dabei dieselbe Materialstärke, insbesondere dieselbe Blechdicke aufweisen. Wenn die Flachkanalanschlüsse und der Rohrabschnitt ein einteiliges Blechformteil sind, können sowohl die die Flachkanalanschlüsse bildenden Blechanteile als auch der den Rohrabschnitt bildende Blechabschnitt als einlagige Blechanteile mit derselben Blechdicke ausgebildet sein.

Eine Aufsteckdichtung kann über mindestens einen der Flachkanalanschlüsse auf den Flachkanalverbinder aufgesetzt sein, wobei die Aufsteckdichtung die freie Schnittkante an der Stirnseite des Flachkanalanschlusses bedeckt. Alternativ kann die Aufsteckdichtung jedoch auch mit einem Flachkanal bereitgestellt sein und über das freie Ende des Flachkanals auf den Flachkanal aufgesteckt sein, so dass die beschriebene Wirkung, wonach die Aufsteckdichtung über einen der Flachkanalanschlüsse auf den Flachkanalverbinder aufgesetzt wird und die freie Schnittkante des Flachkanalanschlusses von der Aufsteckdichtung bedeckt wird, erst mit dem Verbinden des Flachkanalverbinders mit dem Flachkanal erreicht wird.

Das Stützelement kann ein Formteil, insbesondere ein Blechformteil sein, das an gegenüberliegenden Enden jeweils einen Stützabschnitt aufweist, wobei die Stützabschnitte über einen Steg miteinander verbunden sind. Über die Stützabschnitte kann das Stützelement formschlüssig an gegenüberliegenden Innenseiten des Rohrabschnitts anliegen.

Das Stützelement kann eine Z-Kantung aufweisen, deren diametral gegenüberliegende Enden jeweils einen der Stützabschnitte aufweisen oder bilden.

Endseitig an die diametral gegenüberliegenden Enden kann jeweils ein Formschlussadapter angeformt sein, der entlang seines Außenumfangs am Innenumfang des Rohrabschnitts anliegt.

Der Formschlussadapter kann einen gerundeten Abschnitt oder eine Kantung aufweisen, über den/die der Formschlussadapter an den Stützabschnitt angeformt ist.

Der Formschlussadapter kann endseitig und angrenzend an den gerundeten Abschnitt oder die Kantung einen geraden Abschnitt aufweisen, der sich parallel zu dem Steg erstreckt und an einer Innenseite des Rohrabschnitts anliegt, wobei sich der Steg senkrecht zu den gegenüberliegenden Wandabschnitten des Rohrabschnitts erstreckt, die über den Stützabschnitt gegeneinander abgestützt sind.

Ebenso kann das Stützelement eine Doppel-T-Geometrie aufweisen.

Der Rohrabschnitt mit den beiden Flachkanalanschlüssen und das Stützelement können als separate Bauteile ausgebildet sein. Dabei kann das Stützelement in dem Rohrabschnitt entlang dessen Axialrichtung verschieblich aufgenommen sein. Somit ist es insbesondere möglich, das Stützelement bedarfsweise nachträglich in den Rohrabschnitt einzusetzen, etwa dann, wenn erwartet wird, dass der Flachkanalverbinder einer hohen Belastung ausgesetzt werden könnte. Ebenso ermöglicht diese Ausführungsform, dass das Stützelement, etwa für Montagezwecke, zeitweise entnommen wird, so dass der Querschnitt des Flachkanalverbinders vollständig geöffnet und damit der Zugang für Werkzeug und dergleichen gewährleistet ist.

Der Rohrabschnitt kann an seinem Außenumfang mindestens eine erhabene Prägung aufweisen. Die Prägung kann eine Anschlagsseite aufweisen, die sich senkrecht zu der Axialrichtung des Rohrabschnitts erstreckt.

Der Steg des Stützelements kann weiterhin den Querschnitt des Flachkanalverbinders in zwei im Wesentlichen gleich große Teilquerschnitte unterteilen.

Das Dünnblech kann eine Materialstärke von 0,3 mm bis 0,8 mm und vorzugweise von 0,5 mm bis 0,6 mm aufweisen.

Bei der Kanalanordnung aus einem Flachkanalverbinder der zuvor beschriebenen Art und einem Flachkanal weist der Flachkanal einen aus einem Dünnblech bestehenden Rechteckkanalabschnitt auf, wobei über eine freie Stirnseite des Rechteckkanalabschnitts eine Aufsteckdichtung auf den Rechteckkanalabschnitt aufgesteckt ist.

Die Aufsteckdichtung kann sich mit einem ersten Flansch entlang des Innenumfangs des Rechteckkanalabschnitts und mit einem zweiten Flansch entlang des Außenumfangs des Rechteckkanalabschnitts erstrecken.

Mindestens einer der Flansche kann eine Verstärkungsstruktur aufweisen, insbesondere ein Metallinlay, die den Flansch und damit den Flachkanal an der Stirnseite versteift.

Weitere Einzelheiten der Erfindung werden anhand der nachstehenden Figuren erläutert. Dabei zeigt:
- Figur 1: eine erste Ausführungsform eines Flachkanalverbinders mit entnommenem Stützelement;
- Figur 2: die Ausführungsform gemäß Figur 1 mit eingesetztem Stützelement;
- Figur 3: eine zweite Ausführungsform eines Flachkanalverbinders mit entnommenem Stützelement;
- Figur 4: die Ausführungsform gemäß Figur 3 mit eingesetztem Stützelement;
- Figur 5: eine dritte Ausführungsform eines Flachkanalverbinders mit entnommenem Stützelement;
- Figur 6: die Ausführungsform gemäß Figur 5 mit eingesetztem Stützelement; und
- Figur 7: eine Kanalanordnung gemäß einer Ausführungsform der Erfindung

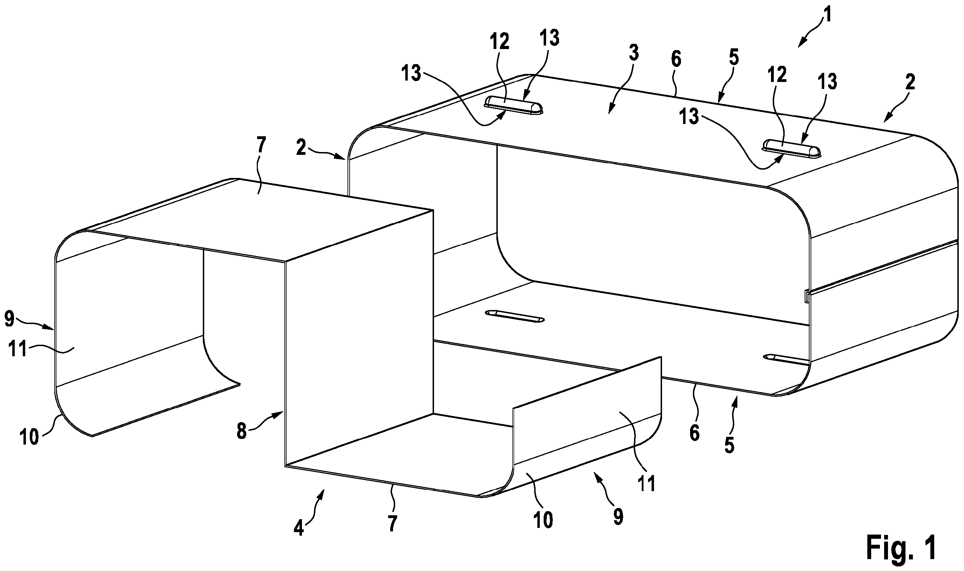

Zur besseren Veranschaulichung der Erfindung ist bei der Darstellung gemäß Figur 1 der Flachkanalverbinder 1 mit aus dem Rohrabschnitt 3 entnommenem Stützelement 4 dargestellt. Der Rohrabschnitt 3 weist an gegenüberliegenden Stirnseiten jeweils einen Flachkanalanschluss 2 auf. Der Rohrabschnitt 3 und die Flachkanalanschlüsse 2 sind als ein einteiliges Blechformteil konstanter Materialstärke und Blechdicke ausgebildet. Am Außenumfang des Rohrabschnitts 3 sind an den gegenüberliegenden Wandabschnitten 5 jeweils erhabene Prägungen 12 mit Anschlagsseiten 13 ausgebildet, die einen Anschlag für die Stirnseiten der miteinander zu verbindenden Kanalenden bilden.

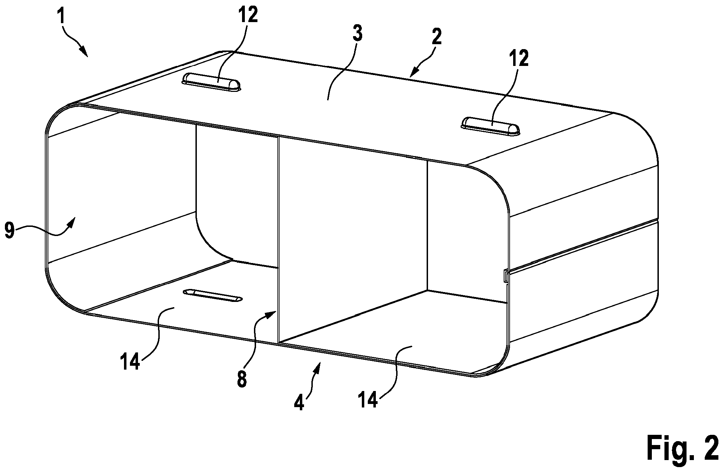

Das Stützelement 4 ist ebenso als ein Blechformteil ausgebildet und weist an seinen gegenüberliegenden Enden jeweils einen Stützabschnitt 7 auf. Die Stützabschnitte 7 sind über einen Steg 8 miteinander verbunden, der sich im Wesentlichen senkrecht zu den beiden Stützabschnitten 7 erstreckt. Die Stützabschnitte 7 weisen eine Außenkontur auf, die im Wesentlichen die Innenkontur der gegenüberliegenden Wandabschnitte 5 abbildet, so dass bei in den Rohrabschnitt 3 eingesetztem Stützelement 4 (vergleiche Figur 2) die Stützabschnitte 7 im Wesentlichen formschlüssig an der Innenseite der gegenüberliegenden Wandabschnitte 5 anliegen.

Die beiden an den Steg 8 angeformten Stützabschnitte 7 bilden eine Z-Kantung, wobei die Stützabschnitte 7 diametral gegenüberliegende Enden der Z-Kantung bilden. Endseitig angeformt an die Stützabschnitte 7 ist jeweils ein Formschlussadapter 9, der entlang seines Außenumfangs am Innenumfang des Rohrabschnitts 3, gegebenenfalls unter Vorspannung für den besseren Halt, zur Anlage gebracht werden kann (vergleiche Figur 2). Dazu weist der Formschlussadapter 9 eine Außenkontur auf, die im Wesentlichen die Innenkontur des Rohrabschnitts 3 abbildet. Insbesondere kann der Formschlussadapter 9 mindestens einen gerundeten Abschnitt 10 aufweisen, über den der Formschlussadapter an den Stützabschnitt angeformt ist und in einem gerundeten Eckbereich des Rohrabschnitts 3 am Innenumfang des Rohrabschnitts 3 anliegt.

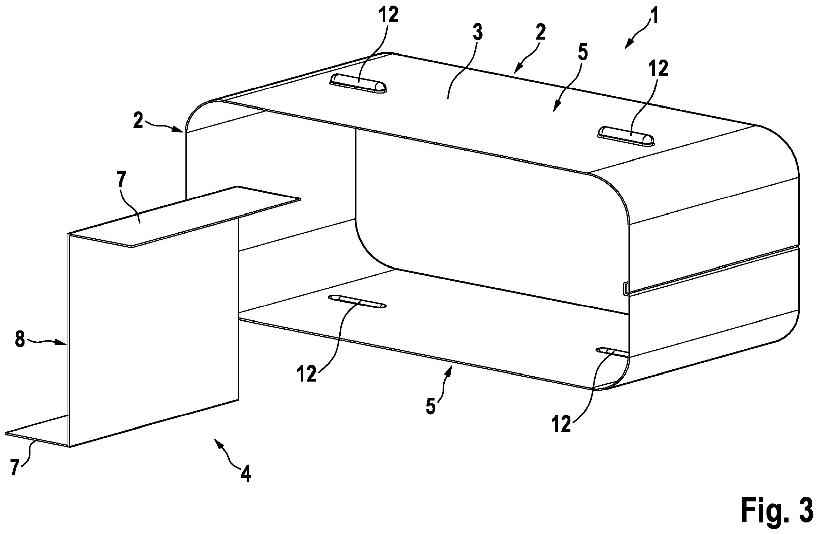

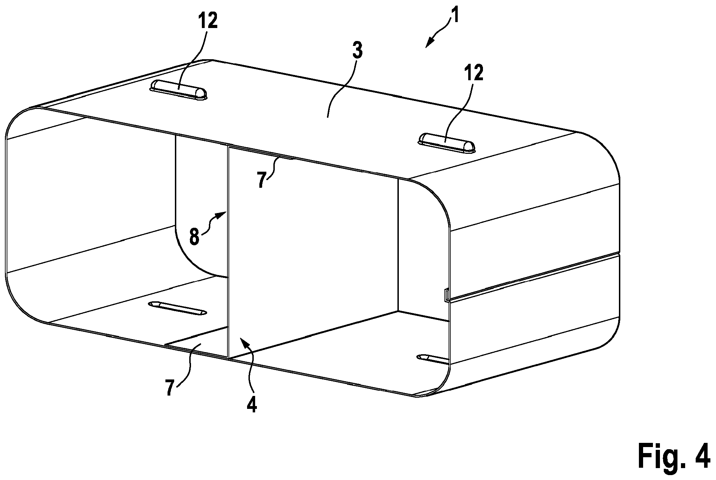

Bei der in den Figuren 3 und 4 gezeigten Ausführungsform ist das Stützelement 4 im Wesentlichen ausschließlich als ein Z-förmig gekantetes Blechformteil ausgebildet, bestehend aus dem Steg 8, der sich senkrecht zu den gegenüberliegenden Wandabschnitten 5 erstreckt, sowie an gegenüberliegende Enden des Steges 8 einteilig angeformte beziehungsweise von dem Steg 8 abgekantete Stützabschnitte 7. Die Stützabschnitte 7 können sich insbesondere senkrecht zu dem Steg 8 erstrecken, wobei sie mit ihren von dem Steg 8 abgewandten Außenseiten an dem Innenumfang der gegenüberliegenden Wandabschnitte 5 des Rohrabschnitts formschlüssig zur Anlage gebracht werden können.

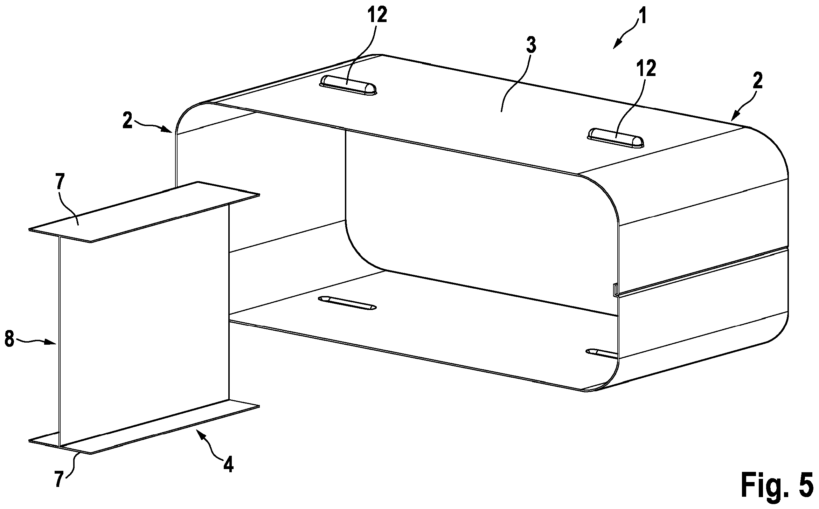

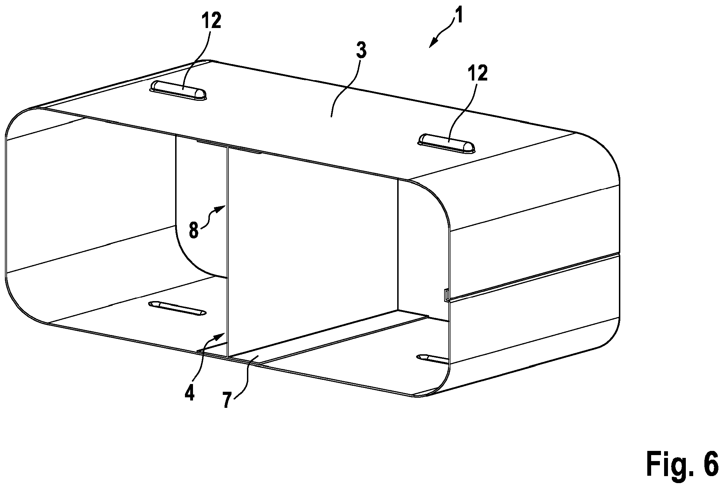

In Abwandlung von der in den Figuren 3 und 4 gezeigten Ausführungsform ist bei der in den Figuren 5 und 6 gezeigten Ausführungsform der Stützabschnitt mit einer Doppel-T-Geometrie ausgebildet.

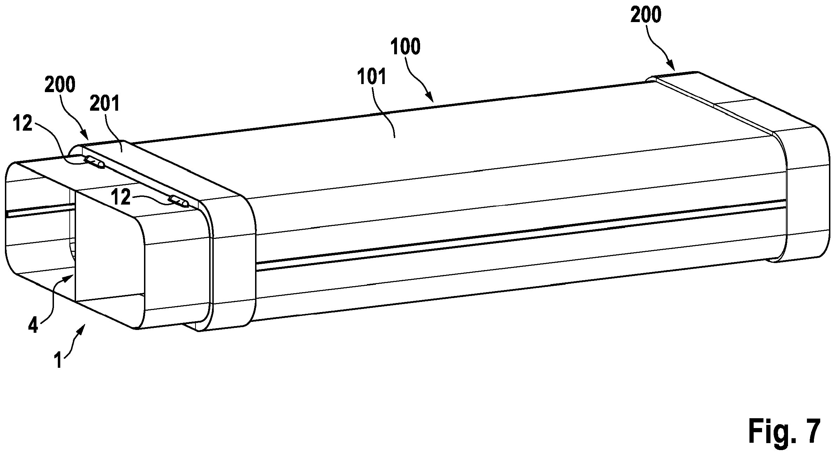

Die Figur 7 zeigt eine Kanalanordnung aus einem Flachkanalverbinder, etwa einem Flachkanalverbinder gemäß einer der vorangegangenen Ausführungsformen entsprechend den Figuren 1 bis 6, und einem Flachkanal 100, wobei der Flachkanal 100 einen aus einem Dünnblech bestehenden Rechteckkanalabschnitt 101 aufweist, wobei über eine freie Stirnseite des Rechteckkanalabschnitts 101 eine Aufsteckdichtung 200 auf den Rechteckkanalabschnitt aufgesteckt ist. Die Aufsteckdichtung 200 erstreckt sich mit einem ersten Flansch 201 entlang des Rechteckkanalabschnitts 101 und mit einem zweiten Flansch (nicht dargestellt) entlang des Außenumfangs des Rechteckkanalabschnitts 101. Es ist weiterhin zu erkennen, dass der Flachkanal 100 mit der Stirnseite seiner Aufsteckdichtung 200 an dem Anschlag 13 des Flachkanalverbinders 1 zur Anlage gebracht ist, so dass eine definierte Ausrichtung zwischen dem Flachkanalverbinder 1 und dem Flachkanal 100 sichergestellt ist.

### Bezugszeichenliste

- 1: Flachkanalverbinder
- 2: Flachkanalanschluss
- 3: Rohrabschnitt
- 4: Stützelement
- 5: Wandabschnitt
- 6: Schnittkante
- 7: Stützabschnitt
- 8: Steg
- 9: Formschlussadapter
- 10: gerundeter Abschnitt
- 11: gerader Abschnitt
- 12: Prägung
- 13: Anschlagsseite
- 14: Teilquerschnitt
- 100: Flachkanal
- 101: Rechteckkanalabschnitt
- 200: Aufsteckdichtung
- 201: Flansch

## Patentansprüche

1. Kanalanordnung aus einem Flachkanalverbinder (1) und einem Flachkanal (100), wobei der Flachkanal (100) einen aus einem Dünnblech bestehenden Rechteckkanalabschnitt (101) aufweist und über eine freie Stirnseite des Rechteckkanalabschnitts (101) eine Aufsteckdichtung (200) auf den Rechteckkanalabschnitt (101) aufgesteckt ist, und wobei der Flachkanalverbinder (1) einen ersten und einen zweiten Flachkanalanschluss (2) aufweist, die über einen Rohrabschnitt (3) miteinander verbunden sind, wobei im Querschnitt des Rohrabschnitts (3) ein Stützelement (4) angeordnet ist, das gegenüberliegende Wandabschnitte (5) des Rohrabschnitts (3) gegeneinander abstützt, wobei sowohl der Rohrabschnitt (3) als auch die beiden Flachkanalanschlüsse (2) aus Dünnblech bestehen und wobei sich das Stützelement (4) in Axialrichtung des Flachkanalverbinders (1) von einer ersten freien Schnittkante (6) bis zu einer zweiten freien Schnittkante (6) an den Stirnseiten der Flachkanalanschlüsse (2) erstreckt.

2. Kanalanordnung nach Anspruch 1, bei dem die Flachkanalanschlüsse (2) und der Rohrabschnitt (3) ein einteiliges Blechformteil sind.

3. Kanalanordnung nach Anspruch 1 oder 2, bei dem die Aufsteckdichtung (200) über mindestens einen der Flachkanalanschlüsse (2) auf den Flachkanalverbinder (1) aufgesetzt ist und die Aufsteckdichtung (200) die freie Schnittkante (6) an der Stirnseite des Flachkanalanschlusses (2) bedeckt.

4. Kanalanordnung nach einem der vorangegangen Ansprüche, bei dem das Stützelement (4) ein Formteil, insbesondere ein Blechformteil, ist, das an gegenüber liegenden Enden jeweils einen Stützabschnitt (7) aufweist, die über einen Steg (8) miteinander verbunden sind und über die das Stützelement (4) formschlüssig an gegenüber liegenden Innenseiten des Rohrabschnitts (3) anliegt.

5. Kanalanordnung nach Anspruch 4, bei dem das Stützelement (4) eine Z-Kantung aufweist, deren diametral gegenüber liegende Enden jeweils einen der Stützabschnitte (7) aufweisen.

6. Kanalanordnung nach Anspruch 5, bei dem endseitig an die diametral gegenüber liegende Enden jeweils ein Formschlussadapter (9) angeformt ist, der entlang seines Außenumfangs am Innenumfang des Rohrabschnitts (3) anliegt.

7. Kanalanordnung nach Anspruch 6, bei dem der Formschlussadapter (9) einen gerundeten Abschnitt (10) oder eine Kantung aufweist, über den/die der Formschlussadapter (9) an den Stützabschnitt (7) angeformt ist.

8. Kanalanordnung nach Anspruch 7, bei dem der Formschlussadapter (9) endseitig und angrenzend an den gerundeten Abschnitt oder die Kantung einen geraden Abschnitt (11) aufweist, der sich parallel zu dem Steg (8) erstreckt und an einer Innenseite des Rohrabschnitts (3) anliegt, die sich senkrecht zu den gegenüber liegenden Wandabschnitten (5) des Rohrabschnitts (3) erstreckt, die über den Stützabschnitt (7) gegeneinander abgestützt sind.

9. Kanalanordnung nach Anspruch 4, bei dem das Stützelement (4) eine Doppel-T-Geometrie aufweist.

10. Kanalanordnung nach einem der vorangegangenen Ansprüche, bei dem der Rohrabschnitt (3) mit den beiden Flachkanalanschlüssen (2) und das Stützelement (4) als separate Bauteile ausgebildet sind, und wobei das Stützelement (4) in dem Rohrabschnitt (3) entlang dessen Axialrichtung verschieblich aufgenommen ist.

11. Kanalanordnung nach einem der vorangegangenen Ansprüche, bei dem der Rohrabschnitt (3) an seinem Außenumfang mindestens eine erhabene Prägung (12) aufweist, wobei die Prägung (12) eine Anschlagseite (13) aufweist, die sich senkrecht zu der Axialrichtung des Rohrabschnitts (3) erstreckt.

12. Kanalanordnung nach Anspruch 4, bei dem der Steg (8) des Stützelements (4) den Querschnitt des Flachkanalverbinders (1) in zwei im Wesentlichen gleich große Teilquerschnitte (14) unterteilt.

13. Kanalanordnung nach einem der vorangegangenen Ansprüche, bei dem das Dünnblech eine Materialstärke von 0,3 mm bis 0,8 mm und vorzugweise von 0,5 mm bis 0,6 mm aufweist.

14. Kanalanordnung nach einem der vorhergehenden Ansprüche, bei der sich die Aufsteckdichtung (200) mit einem ersten Flansch (201) entlang des Innenumfangs des Rechteckkanalabschnitts (101) und mit einem zweiten Flansch (201) entlang des Außenumfangs des Rechteckkanalabschnitts (101) erstreckt.

15. Kanalanordnung nach Anspruch 14, bei der mindestens einer der Flansche (201) eine Verstärkungsstruktur aufweist, insbesondere ein Metallinlay, die den Flansch (201) und damit den Flachkanal (100) an der Stirnseite versteift.

## Claims

1. A duct assembly consisting of a flat duct connector (1) and a flat duct (100), wherein the flat duct (100) has a rectangular duct section (101) consisting of a thin sheet metal and a slip-on gasket (200) is slipped onto the rectangular duct section (101) via a free end face of the rectangular duct section (101), and wherein the flat duct connector (1) has a first and a second flat duct connection (2) which are connected to each other via a tube section (3), wherein a supporting element (4) is arranged in the cross section of the tube section (3), which supports opposite wall sections (5) of the tube section (3) against each other, wherein both the tube section (3) and the two flat duct connections (2) are made of thin sheet metal and wherein the supporting element (4) extends in the axial direction of the flat duct connector (1) from a first free cut edge (6) to a second free cut edge (6) at the end faces of the flat duct connectors (2).

2. The duct assembly according to claim 1, in which the flat duct connections (2) and the tube section (3) are a one-piece sheet metal moulding.

3. The duct assembly according to claim 1 or 2, in which a slip-on gasket (200) is placed over at least one of the flat duct connections (2) on the flat duct connector (1) and the slip-on gasket (200) covers the free cut edge (6) at the end face of the flat duct connection (2).

4. The duct assembly according to one of the preceding claims, in which the supporting element (4) is a shaped part, in particular a sheet metal shaped part, which has a supporting section (7) at both of opposite ends, which are connected to one another via a web (8) and via which the supporting element (4) bears positively against opposite inner sides of the tube section (3).

5. The duct assembly according to claim 4, in which the supporting element (4) has a Z-edge, the diametrically opposite ends of which each have one of the supporting sections (7).

6. The duct assembly according to claim 5, in which a form-fit adapter (9) is formed at each end of the diametrically opposite ends, which adapter (9) rests along its outer circumference on the inner circumference of the tube section (3).

7. The duct assembly according to claim 6, in which the form-fit adapter (9) has a rounded section (10) or a bend, via which the form-fit adapter (9) is formed onto the supporting section (7).

8. The duct assembly according to claim 7, in which the form-fit adapter (9) has a straight section (11) at the end and adjacent to the rounded section or bend, which extends parallel to the web (8) and abuts an inner side of the tube section (3), which extends perpendicularly to the opposite wall sections (5) of the tube section (3), which are supported against each other via the supporting section (7).

9. The duct assembly according to claim 4, in which the supporting element (4) has a double-T geometry.

10. The duct assembly according to one of the preceding claims, in which the tube section (3) with the two flat duct connections (2) and the supporting element (4) are designed as separate components, and wherein the supporting element (4) is received in the tube section (3) so as to be displaceable along the axial direction thereof.

11. The duct assembly according to one of the preceding claims, in which the tube section (3) has at least one raised embossing (12) on its outer circumference, the embossing (12) having a stop side (13) which extends perpendicularly to the axial direction of the tube section (3).

12. The duct assembly according to claim 4, in which the web (8) of the supporting element (4) divides the cross-section of the flat duct connector (1) into two partial cross-sections (14) of substantially equal size.

13. The duct assembly according to one of the preceding claims, in which the thin sheet has a material thickness of 0.3 mm to 0.8 mm and preferably of 0.5 mm to 0.6 mm.

14. The duct assembly according to one of the preceding claims, in which the slip-on gasket (200) extends with a first flange (201) along the inner circumference of the rectangular duct section (101) and with a second flange (201) along the outer circumference of the rectangular duct section (101).

15. The duct assembly according to claim 14, in which at least one of the flanges (201) has a reinforcing structure, in particular a metal inlay, which stiffens the flange (201) and thus the flat channel (100) at the end face.

## Revendications

1. Ensemble de caniveau composé d'un raccord de caniveau plat (1) et d'un caniveau plat (100), le caniveau plat (100) comportant un tronçon de canal rectangulaire (101) réalisé en tôle mince, et un joint d'étanchéité enfichable (200) étant enfiché sur le tronçon de canal rectangulaire (101) par-dessus un côté frontal libre du tronçon de canal rectangulaire (101), et le raccord de caniveau plat (1) comportant un premier et un deuxième raccordement de caniveau plat (2) qui sont raccordés l'un à l'autre par le biais d'un tronçon tubulaire (3), un élément d'appui (4) étant disposé dans la section transversale du tronçon tubulaire (3) et supportant l'un contre l'autre des tronçons de paroi (5) opposés du tronçon tubulaire (3), aussi bien le tronçon tubulaire (3) que les deux raccordements de caniveau plat (2) étant réalisés en tôle mince, et l'élément d'appui (4) s'étendant dans la direction axiale du raccord de caniveau plat (1) à partir d'une première arête de coupe (6) libre jusqu'à une deuxième arête de coupe (6) libre sur les côtés frontaux des raccordements de caniveau plat (2).

2. Ensemble de caniveau selon la revendication 1, dans lequel les raccordements de caniveau plat (2) et le tronçon tubulaire (3) sont une pièce de forme en tôle en une partie.

3. Ensemble de caniveau selon la revendication 1 ou 2, dans lequel le joint d'étanchéité enfichable (200) est posé sur le raccord de caniveau plat (1) par-dessus au moins un des raccordements de caniveau plat (2), et le joint d'étanchéité enfichable (200) recouvre l'arête de coupe (6) libre sur le côté frontal du raccordement de caniveau plat (2).

4. Ensemble de caniveau selon l'une des revendications précédentes, dans lequel l'élément d'appui (4) est une pièce de forme, en particulier une pièce de forme en tôle, qui comporte au niveau d'extrémités opposées respectivement un tronçon d'appui (7) qui sont raccordés l'un à l'autre par le biais d'une traverse (8) et par le biais desquels l'élément d'appui (4) est adjacent par liaison de forme à des côtés intérieurs opposés du tronçon tubulaire (3).

5. Ensemble de caniveau selon la revendication 4, dans lequel l'élément d'appui (4) comporte un pliage en Z dont les extrémités diamétralement opposées comportent respectivement un des tronçons d'appui (7).

6. Ensemble de caniveau selon la revendication 5, dans lequel, côté extrémité, aux extrémités diamétralement opposées, il est formé respectivement un adaptateur à liaison de forme (9) qui, le long de sa périphérie extérieure, est adjacent à la périphérie intérieure du tronçon tubulaire (3).

7. Ensemble de caniveau selon la revendication 6, dans lequel l'adaptateur à liaison de forme (9) comporte un tronçon (10) arrondi ou un pliage par le biais duquel l'adaptateur à liaison de forme (9) est formé sur le tronçon d'appui (7).

8. Ensemble de caniveau selon la revendication 7, dans lequel l'adaptateur à liaison de forme (9) comporte, côté extrémité et de façon attenante au tronçon arrondi ou au pliage, un tronçon (11) rectiligne qui s'étend parallèlement à la traverse (8) et qui est adjacent à un côté intérieur du tronçon tubulaire (3) qui s'étend perpendiculairement aux tronçons de paroi (5) opposés du tronçon tubulaire (3) qui sont appuyés l'un contre l'autre par le biais du tronçon d'appui (7).

9. Ensemble de caniveau selon la revendication 4, dans lequel l'élément d'appui (4) présente une géométrie en double T.

10. Ensemble de caniveau selon l'une des revendications précédentes, dans lequel le tronçon tubulaire (3) avec les deux raccordements de caniveau plat (2) et l'élément d'appui (4) sont constitués en tant que composants séparés, et l'élément d'appui (4) étant logé dans le tronçon tubulaire (3) de façon coulissante le long de sa direction axiale.

11. Ensemble de caniveau selon l'une des revendications précédentes, dans lequel le tronçon tubulaire (3) comporte à sa périphérie extérieure au moins un estampage (12) en relief, l'estampage (12) comportant un côté de butée (13) qui s'étend perpendiculairement à la direction axiale du tronçon tubulaire (3).

12. Ensemble de caniveau selon la revendication 4, dans lequel la traverse (8) de l'élément d'appui (4) divise la section transversale du raccord de caniveau plat (1) en deux sections transversales partielles (14) essentiellement de mêmes dimensions.

13. Ensemble de caniveau selon l'une des revendications précédentes, dans lequel la tôle mince présente une épaisseur de matériau des 0,3 mm à 0,8 mm et de préférence de 0,5 mm à 0,6 mm.

14. Ensemble de caniveau selon l'une des revendications précédentes, dans lequel le joint d'étanchéité enfichable (200) s'étend avec une première bride (201) le long de la périphérie intérieure du tronçon de canal rectangulaire (101) et avec une deuxième bride (201) le long de la périphérie extérieure du tronçon de canal rectangulaire (101).

15. Ensemble de caniveau selon la revendication 14, dans lequel au moins une des brides (201) comporte une structure de renforcement, en particulier une incrustation métallique, qui rigidifie la bride (201) et donc le caniveau plat (100) sur le côté frontal.
